# EUROPEAN PATENT SPECIFICATION

(11) **EP 3 531 755 B1**
(45) Date of publication and mention of the grant of the patent: **01.09.2021**
(21) Application number: 16921148.9
(22) Date of filing: 16.11.2016
(51) Int. Cl.: H04L 5/00, H04W 52/36

(54) **UPLINK DATA TRANSMISSION METHOD, TERMINAL DEVICE, AND NETWORK DEVICE**
UPLINK-DATENÜBERTRAGUNGSVERFAHREN, ENDGERÄTEVORRICHTUNG UND NETZWERKVORRICHTUNG
PROCÉDÉ DE TRANSMISSION DE DONNÉES DE LIAISON MONTANTE, DISPOSITIF TERMINAL, ET DISPOSITIF DE RÉSEAU

(30) Priority: 09.11.2016 WO PCT/CN2016/105241
(43) Date of publication of application: 28.08.2019
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2016/106155
(87) International publication number: WO 2018/086147

(56) References cited:
- WO-A1-2010/018854
- WO-A1-2010/073290
- WO-A1-2016/171765
- CN-A- 102 239 733
- US-A1- 2011 110 357
- LG ELECTRONICS: 'Uplink Multiple Access Schemes for LTE-A' 3GPP TSG RAN WG1 #54BIS, R1-083658 03 October 2008, XP050317010
- SHARP: 'Uplink Multiple Access Scheme for LTE-Advanced' 3GPP TSG RAN WG1 MEETING #54, RI-082787 22 August 2017, XP050316279

## Description

### TECHNICAL FIELD

Embodiments of the disclosure relate to the field of wireless communications, and more particularly, to a method for uplink data transmission, a terminal device and a network device.

### BACKGROUND

At present, multiple uplink multiple access manners, for example, a Discrete Fourier Transformation Spread Orthogonal Frequency Division Multiplexing (DFT-S-OFDM) and Cyclic Prefix Orthogonal Frequency Division Multiplexing (CP-OFDM), are introduced into an uplink transmission process of a 5^{th}-Generation (5G) system. The DFS-S-OFDM may only be adopted for uplink single-layer transmission and the CP-OFDM may be adopted for uplink single-layer or uplink multilayer transmission. The specific multiple access manner adopted for a terminal device may be configured by a network-side device according to uplink channel quality of the terminal device. Therefore, how to notify, by a network-side device, of a terminal device an uplink multiple access manner adopted for the terminal device is a problem urgent to be solved.

The prior art documents are represented by WO 2010/018854 A1 and WO 2016/171765 A1 disclosing some aspects of an uplink multiple access scheme.

### SUMMARY

The present invention is defined in the appended independent claims. Advantageous features are set out in the appended dependent claims.

The embodiments of the disclosure provide a method for uplink data transmission, a terminal device and a network device. The terminal device may learn about an uplink multiple access manner adopted for the terminal device during uplink transmission.

In a first aspect, there is provided a method for uplink data transmission, which includes the following operations.

Receiving, by a terminal device, Downlink Control Information, DCI, sent by a network device; determining, by the terminal device, that an uplink multiple access manner for the terminal device is Discrete Fourier Transformation Spread Orthogonal Frequency Division Multiplexing, DFT-S-OFDM, or Cyclic Prefix Orthogonal Frequency Division Multiplexing, CP-OFDM, according to a first DCI format and a second DCI format of the DCI, wherein the first DCI format is different from the second DCI format, and the first DCI format and the second DCI format correspond to different control information lengths; and transmitting, by the terminal device, uplink data according to the uplink multiple access manner DFT-S-OFDM or CP-OFDM.

In a second aspect, there is provided a terminal device, which may be configured to execute each process executed by the terminal device in the method for uplink data transmission in the first aspect.

In a third aspect, there is provided a method for uplink data transmission, which includes the following operations.

Sending, by a network device, Downlink Control Information, DCI, to a terminal device, a first DCI format and a second DCI format of the DCI being different, the first DCI format and the second DCI format corresponding to different control information lengths, and the first DCI format and the second DCI format of the DCI being used by the terminal device to determine that an uplink multiple access manner for the terminal device is Discrete Fourier Transformation Spread Orthogonal Frequency Division Multiplexing, DFT-S-OFDM, or Cyclic Prefix Orthogonal Frequency Division Multiplexing, CP-OFDM; and receiving, by the network device, uplink data transmitted by the terminal device according to the uplink multiple access manner.

In a forth aspect, there is provided a network device, which may be configured to execute each process executed by the network device in the method for uplink data transmission in the third aspect.

### BRIEF DESCRIPTION OF DRAWINGS

FIG. 1 is a schematic architecture diagram of an application scenario according to an embodiment of the disclosure.
FIG. 2 is an interaction flowchart of a method for uplink data transmission according to an embodiment of the disclosure.
FIG. 3 is an interaction flowchart of a method for uplink data transmission according to an embodiment of the disclosure.
FIG. 4 is an interaction flowchart of a method for uplink data transmission according to an embodiment of the disclosure.
FIG. 5 is an interaction flowchart of a method for uplink data transmission according to an embodiment of the disclosure.
FIG. 6 is a structure block diagram of a terminal device according to an embodiment of the disclosure.
FIG. 7 is a structure block diagram of a terminal device according to an embodiment of the disclosure.
FIG. 8 is a schematic structure diagram of a system chip according to an embodiment of the disclosure.
FIG. 9 is a structure block diagram of a network device according to an embodiment of the disclosure.
FIG. 10 is a structure block diagram of a network device according to an embodiment of the disclosure.
FIG. 11 is a schematic structure diagram of a system chip according to an embodiment of the disclosure.

### DETAILED DESCRIPTION

The technical solutions in the embodiments of the disclosure will be described below in combination with the drawings.

It is to be understood that the technical solutions of the embodiments of the disclosure may be applied to various communication systems, for example, a Global System of Mobile Communication (GSM), a Code Division Multiple Access (CDMA) system, a Wideband Code Division Multiple Access (WCDMA) system, a Long Term Evolution (LTE) system, an LTE Frequency Division Duplex (FDD) system, LTE Time Division Duplex (TDD), a Universal Mobile Telecommunication System (UMTS) and a future 5G system.

Each embodiment of the disclosure is described in combination with a terminal device. The terminal device may also be called User Equipment (UE), an access terminal, a user unit, a user station, a mobile radio station, a mobile station, a remote station, a remote terminal, a mobile device, a user terminal, a terminal, a wireless communication device, a user agent, a user device or the like. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a future 5G network, a terminal device in a future evolved Public Land Mobile Network (PLMN) or the like.

Each embodiment of the disclosure is described in combination with a network device. The network device may be a device configured to communicate with the terminal device, for example, may be a Base Transceiver Station (BTS) in the GSM or the CDMA, may also be a Node B (NB) in the WCDMA system and may also be an Evolutional Node B (eNB or eNode B) in the LTE system. Or the network device may be a relay station, an access point, a vehicle-mounted device, a wearable device, a network-side device in the future 5G network, a network device in the future evolved PLMN or the like.

In the embodiments of the disclosure, an uplink multiple access manner is also called an uplink waveform in a 5G system.

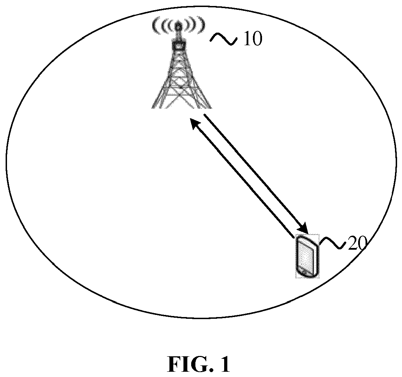

FIG. 1 is a schematic diagram of an application scenario according to the disclosure. A communication system in FIG. 1 may include a network device 10 and a terminal device 20. The network device 10 is configured to provide communication service for the terminal device 20 and access to a core network. The terminal device 20 searches a synchronization signal, broadcast signal and the like sent by the network device 10 to access a network, thereby communicating with the network. Arrows illustrated in FIG. 1 may represent uplink/downlink transmission implemented through a cellular link between the terminal device 20 and the network device 10.

The network in the embodiments of the disclosure may refer to a PLMN or a Device to Device (D2D) network or a Machine to Machine/Man (M2M) network or another network. FIG. 1 is only an exemplary simplified schematic diagram. The network may further include another terminal device which is not presented in FIG. 1.

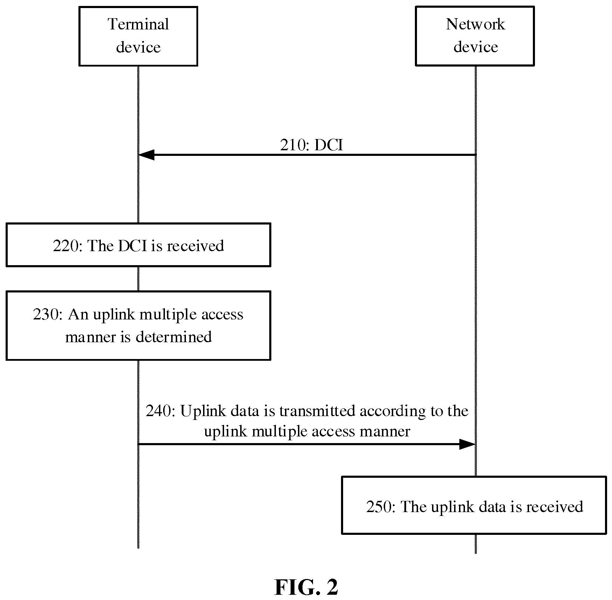

FIG. 2 is an interaction flowchart of a method for uplink data transmission according to an embodiment of the disclosure. A network device and a terminal device are illustrated in FIG. 2. The network device may be, for example, the network device 10 illustrated in FIG. 1 and the terminal device may be, for example, the terminal device 20 illustrated in FIG. 1. In the embodiment of the disclosure, the terminal device may determine at least one of the number of transmission layers or a physical resource configuration manner for the terminal device according to parameter indication information in DCI and determine an uplink multiple access manner according to the at least one of the number of transmission layers or the physical resource configuration manner, so that the network device may flexibly regulate the uplink multiple access manner adopted for the terminal device during single-layer transmission. As illustrated in FIG. 2, a specific flow of uplink data transmission includes the following operations.

In 210, the network device sends the DCI to the terminal device.

In 220, the terminal device receives the DCI sent by the network device.

In 230, the terminal device determines an uplink multiple access manner for the terminal device according to a DCI format of the DCI or parameter indication information carried in the DCI.

Specifically, the network device sends the DCI to the terminal device to indicate an uplink multiple access manner to the terminal device. Herein, the network device may indicate the uplink multiple access manner to the terminal device through the DCI format of the DCI, for example, a DCI format 0 and a DCI format 4. Or the network device may indicate the uplink multiple access manner to the terminal device through the parameter indication information carried in the DCI, for example, information for indicating the number of transmission layers, physical resource configuration manner indication information, DMRS port indication information, PMI information or codeword indication information. The terminal device, after receiving the DCI, may determine the uplink multiple access manner for the terminal device through the DCI format of the DCI or the parameter indication information carried in the DCI.

Optionally, the operation that the terminal device determines the uplink multiple access manner for the terminal device according to the DCI format of the DCI includes that: the terminal device determines the uplink multiple access manner according to the DCI format of the DCI and correspondences between DCI formats and uplink multiple access manners.

Optionally, different DCI formats correspond to different control information lengths, and/or DCI format indication bits in different DCI formats indicate different information.

Herein, the correspondences between the DCI formats and the uplink multiple access manners may be determined and indicated to the terminal device by the network device and may also be predetermined by both the network device and the terminal device, for example, specified in a protocol.

Optionally, the operation that the terminal device determines the uplink multiple access manner for the terminal device according to the parameter indication information carried in the DCI includes that: the terminal device determines transmission information of the terminal device according to the parameter indication information, here, the transmission information includes at least one of the number of transmission layers or a physical resource configuration manner for the terminal device; and the terminal device determines the uplink multiple access manner according to the transmission information.

Herein, optionally, responsive to it is determined by the terminal device that the number of transmission layers is 1, the terminal device determines the uplink multiple access manner according to information carried in the DCI; and responsive to it is determined by the terminal device that the number of transmission layers is greater than 1, the terminal device determines that the uplink multiple access manner is an uplink multiple access manner that is predetermined by both the terminal device and the network device.

That is, when the number of transmission layers for the terminal device is 1, the terminal device may adopt any one of multiple abovementioned uplink multiple access manners; and when the number of transmission layers for the terminal device is greater than 1, the terminal device adopts the uplink multiple access manner that is predetermined by the terminal device and the network device.

In 240, the terminal device transmits uplink data according to the uplink multiple access manner.

Specifically, the terminal device, after determining the uplink multiple access manner for the terminal device, sends the uplink data to the network device according to the uplink multiple access manner. The uplink multiple access manner includes, for example, DFT-S-OFDM, CP-OFDM, SC-FDMA and OFDM.

Optionally, the operation that the terminal device transmits the uplink data according to the uplink multiple access manner includes that: responsive to it is determined by the terminal device that the uplink multiple access manner is DFT-S-OFDM or SC-FDMA, the terminal device performs DFT on the uplink data and transmits in an uplink data channel the uplink data on which the DFT has been performed.

Optionally, the operation that the terminal device transmits the uplink data according to the uplink multiple access manner includes that: responsive to it is determined by the terminal device that the uplink multiple access manner is CP-OFDM or OFDMA, the terminal device forbids performing a DFT on the uplink data and transmits in the uplink data channel the uplink data on which no DFT has been performed.

Optionally, the operation that the terminal device transmits the uplink data according to the uplink multiple access manner includes that: the terminal device determines a target uplink data channel structure according to the uplink multiple access manner and correspondences between uplink multiple access manners and uplink data channel structures; and the terminal device transmits the uplink data according to the target uplink data channel structure.

Herein, the uplink data channel structure includes at least one of: a resource location of DMRS for the uplink data channel, a DMRS sequence for the uplink data channel, a transmission manner for the uplink data carried in the uplink data channel, a time-domain resource occupied by the uplink data channel, or a frequency-domain resource occupied by the uplink data channel.

Specifically, the terminal device and the network device may predetermine the correspondences between the uplink multiple access manners and the uplink data channel structures and the uplink data channel structure corresponding to the uplink multiple access manner for the terminal device is adopted to transmit the uplink data.

For example, the uplink data channel structure may include the resource location of DMRS for the uplink data channel, for example, whether a DMRS occupies a whole OFDM symbol or occupies part of subcarriers on the OFDM symbol. The uplink data channel structure may also include the DMRS sequence for the uplink data channel and different DMRS sequences may be adopted for different uplink data channel structures. The uplink data channel structure may also include a precoding matrix adopted for the uplink data, for example, whether a wideband precoding matrix or a sub-band precoding matrix is adopted for the uplink data. The uplink data channel structure may further include the number of OFDM symbols occupied by the uplink data channel and the like.

In 250, the network device receives the uplink data transmitted by the terminal device according to the uplink multiple access manner.

In the embodiment of the disclosure, the terminal device determines at least one of the number of transmission layers or the physical resource configuration manner for the terminal device through the parameter indication information in the DCI and determines the uplink multiple access manner according to the at least one of the number of transmission layers or the physical resource configuration manner, so that the network device may flexibly regulate the uplink multiple access manner adopted for the terminal device during single-layer transmission.

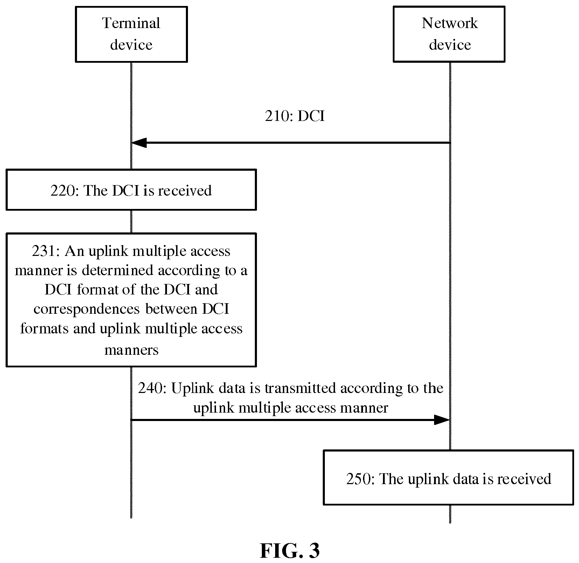

How to determine, by the terminal device, the uplink multiple access manner according to the DCI format of the DCI or the parameter indication information carried in the DCI in 230 will be described below in combination with FIG. 3 to FIG. 5 in detail.

FIG. 3 is an interaction flowchart of a method for uplink data transmission according to an embodiment of the disclosure. As illustrated in FIG. 3, 230 may be replaced with 231. In the embodiment, the terminal device may determine an uplink multiple access manner according to a DCI format of a DCI and correspondences between DCIs and uplink multiple access manners.

In 231, the terminal device determines the uplink multiple access manner according to the DCI format of the DCI and the correspondences between the DCI formats and the uplink multiple access manners.

For example, the terminal device, after receiving the DCI, may determine the DCI format of the DCI by blind detection over multiple possible DCI formats and determine the uplink multiple access manner through the DCI format and the correspondences between the DCI formats and the uplink multiple access manners. The correspondences between the DCI formats and the uplink multiple access manners may be illustrated, for example, in Table 1. The DCI format 0 is a DCI format configured for scheduling single-port transmission and the uplink multiple access manner corresponding to the DCI format 0 is DFT-S-OFDM. Responsive to it is determined that the DCI format of the DCI is the DCI format 0 after blind detection over the multiple possible DCI formats, the terminal device may determine that the uplink multiple access manner for the terminal device is DFT-S-OFDM according to Table 1. The DCI format 4 is a DCI format configured for scheduling uplink Multiple Input Multiple Output (MIMO) transmission and the uplink multiple access manner corresponding to the DCI format 4 is CP-OFDM. Responsive to it is determined that the DCI format of the DCI is the DCI format 4 after blind detection over the multiple possible DCI formats, the terminal device may determine that the uplink multiple access manner for the terminal device is CP-OFDM according to Table 1.

**Table 1**

| DCI format | Uplink multiple access manner |
|---|---|
| DCI format 0 | DFT-S-OFDM |
| DCI format 4 | CP-OFDM |

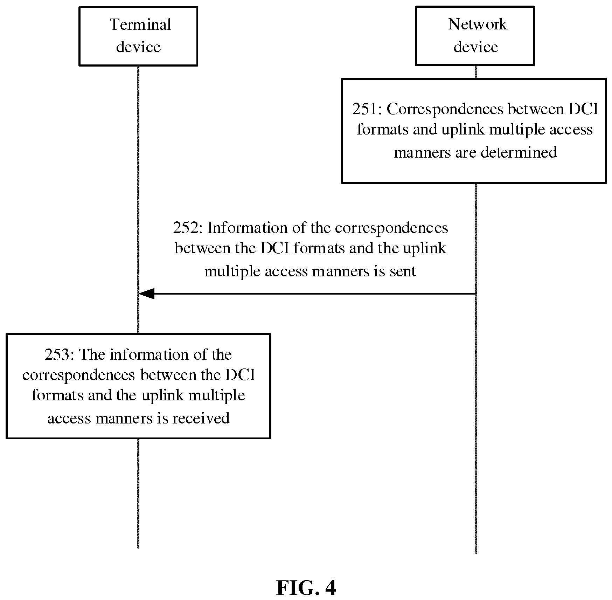

Furthermore, as illustrated in FIG. 4, before the operation that the network device sends the DCI to the terminal device, the method may further include 251 to 253.

In 251, the network device determines the correspondences between the DCI formats and the uplink multiple access manners.

In 252, the network device sends information of the correspondences between the DCI formats and the uplink multiple access manners to the terminal device.

In 253, the terminal device receives the information of the correspondences between the DCI formats and the uplink multiple access manners from the network device.

It is to be understood that the correspondences between the DCI formats and the uplink multiple access manners may be determined and sent to the terminal device by the network device and may also be predetermined by the terminal device and the network device. There are no limits made in the embodiment of the disclosure.

Optionally, different DCI formats correspond to different control information lengths, and/or the DCI format indication bits in different DCI formats indicate different information.

For example, the total number of bits of control information in the DCI format 0 is different from the total number of bits of control information in the DCI format 4, or contents at DCI format indication bits in the DCI format 0 are different from content at DCI format indication bits in the DCI format 4.

In the embodiment, the terminal device determines the uplink multiple access manner through the DCI format of the DCI, so that the network device may flexibly regulate the uplink multiple access manner adopted for the terminal device.

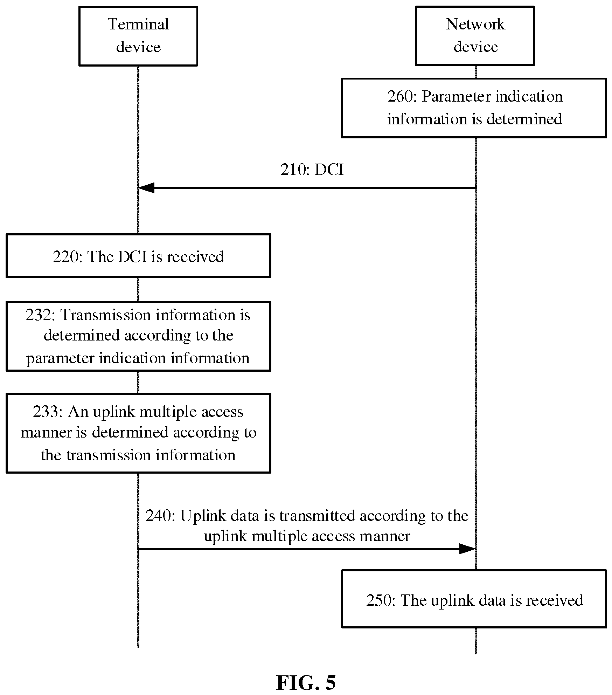

FIG. 5 is an interaction flowchart of a method for uplink data transmission according to an embodiment of the disclosure. As illustrated in FIG. 5, before 210, the method may further include 260 and 230 may be replaced with 232 and 233. The terminal device may determine transmission information of the terminal device according to the parameter indication information, here, the transmission information includes at least one of the number of transmission layers or a physical resource configuration manner for the terminal device. Moreover, the terminal device determines the uplink multiple access manner according to the transmission information.

In 260, the network device determines the parameter indication information.

Herein, the parameter indication information may be carried in the DCI sent to the terminal device by the network device.

Specifically, the network device, after configuring for the terminal device the uplink multiple access manner adopted for the terminal device, may indicate at least one of the number of transmission layers or the physical resource configuration manner to the terminal device through the parameter indication information carried in the DCI when sending the DCI to the terminal device.

Optionally, the parameter indication information may include at least one of: information indicating the number of transmission layers, physical resource configuration manner indication information, DMRS port indication information, PMI information, or codeword indication information.

In 232, the terminal device determines the transmission information of the terminal device according to the parameter indication information.

Herein, the transmission information includes at least one of the number of transmission layers or the physical resource configuration manner for the terminal device.

Specifically, the terminal device, after receiving the parameter indication information sent by the network device, determines the transmission information of the terminal device, for example, at least one of the number of transmission layers or the physical resource configuration manner for the terminal device, according to the parameter indication information.

In a mode, the network device directly indicates the transmission information of the terminal device to the terminal device through the parameter indication information. For example, the parameter indication information may be the information for indicating the number of transmission layers or the physical resource configuration manner indication information. Then, the terminal device, after receiving the information for indicating the number of transmission layers, may directly determine the number of transmission layers for the terminal device itself or, after receiving the physical resource configuration manner indication information, may directly determine the physical resource configuration manner for the terminal device itself.

For example, there may be two bits used to indicate the number of transmission layers in the DCI sent to the terminal device by the network device. For example, if values of the two bits are 00, it is indicated that the number of transmission layers is 1; if the values of the two bits are 01, it is indicated that the number of transmission layers is 2; if the values of the two bits are 10, it is indicated that the number of transmission layers is 3; and if the values of the two bits are 11, it is indicated that the number of transmission layers is 4.

For another example, there may be one bit used to indicate the physical resource configuration manner in the DCI sent to the terminal device by the network device. For example, if a value of the bit is 0, it is indicated that the physical resource configuration manner is 1; and if the value of the bit is 1, it is indicated that the physical resource configuration manner is 2.

In another mode, the network device may indirectly indicate the transmission information of the terminal device to the terminal device through the parameter indication information. For example, the parameter indication information may be the DMRS port indication information, the PMI information or the codeword indication information.

For example, the DMRS port indication information is configured to indicate the number of DMRS ports and the terminal device, after receiving the DMRS port indication information, may learn about the number of DMRS ports and determine the number of transmission layers for the terminal device itself according to the number of DMRS ports. For example, the terminal device determines the number of transmission layers for the terminal device according to the number of DMRS ports and correspondences between the number of DMRS ports and the number of transmission layers. Or, the network device may also jointly indicate the number of DMRS ports and the number of transmission layers in the DCI through the DMRS port indication information.

For another example, the network device may jointly code, in the DCI, a PMI and the number of transmission layers for the terminal device, so that the terminal device, after receiving the PMI information, may acquire the number of transmission layers for terminal device itself from the PMI information.

For another example, the codeword indication information is configured to indicate the number of transmission codewords and the terminal device, after receiving the codeword indication information, may learn about the number of transmission codewords and determine the number of transmission layers for the terminal device itself according to the number of transmission codewords. For example, the terminal device determines the number of transmission layers for the terminal device according to the number of transmission codewords and correspondences between the number of transmission codewords and the number of transmission layers.

In 233, the terminal device determines the uplink multiple access manner for the terminal device according to the transmission information.

Optionally, the uplink multiple access manner includes one of: DFT-S-OFDM, CP-OFDM, SC-FDMA, or OFDMA.

The transmission information may include at least one of the number of transmission layers or the physical resource configuration manner. The conditions that the transmission information includes the number of transmission layers and the transmission information includes the physical resource configuration manner will be described below in detail respectively.

A first condition: the transmission information includes the number of transmission layers.

Optionally, the operation that the terminal device determines the uplink multiple access manner for the terminal device according to the transmission information includes that: responsive to it is determined by the terminal device that the number of transmission layers is greater than 1, the terminal device determines that the uplink multiple access manner is an uplink multiple access manner that is predetermined by the terminal device and the network device.

Optionally, the operation that the terminal device determines the uplink multiple access manner for the terminal device according to the transmission information includes that: responsive to it is determined by the terminal device that the number of transmission layers is 1, the terminal device determines the uplink multiple access manner for the terminal device according to the information carried in the DCI.

That is, when the number of transmission layers of the terminal device is 1, the terminal device may adopt any one of the multiple abovementioned multiple access manners; and when the number of transmission layers of the terminal device is greater than 1, the terminal device adopts the uplink multiple access manner predetermined with the network device. How to determine, by the terminal device, the uplink multiple access manner for the terminal device according to the information carried in the DCI will specifically be described below.

However, it is to be understood that, in the embodiment of the disclosure, the terminal device, responsive to it is determined that the number of transmission layers meets a certain requirement, may also independently determine the uplink multiple access manner. For example, when the condition that the number of transmission layers is smaller than n is met, the uplink multiple access manner for the terminal device is determined according to the information carried in the DCI; and responsive to it is determined that the number of transmission layers is greater than n, the uplink multiple access manner that is predetermined by the terminal device and the network device is adopted, wherein n is a positive integer greater than 1.

Optionally, the operation that the terminal device determines the uplink multiple access manner for the terminal device according to the information carried in the DCI includes that: the terminal device determines the uplink multiple access manner according to DMRS configuration indication information carried in the DCI, here, the DMRS configuration indication information is obtained by jointly coding information on a DMRS configuration and information on the uplink multiple access manner.

That is, before the operation that the network device sends the DMRS configuration indication information carried in the DCI to the terminal device, the method further includes that: the network device jointly codes the information on the DMRS configuration and the information on the uplink multiple access manner to obtain the DMRS configuration indication information.

If the DMRS configuration indication information is 3 bits, contents indicated by different DMRS configuration indication information may be illustrated, for example, in Table 2. Herein, a DMRS configuration 1 and a DMRS configuration 2 are DMRS configurations when the number of transmission layers is 1 and a DMRS configuration 3 to a DMRS configuration 6 are corresponding DMRS configurations when the number of transmission layers is greater than 1.

**Table 2**

| DMRS configuration indication information | Content indicated by the DMRS configuration indication information |
|---|---|
| 0 | DMRS configuration 1, multiple access manner 1 |
| 1 | DMRS configuration 1, multiple access manner 2 |
| 2 | DMRS configuration 2, multiple access manner 1 |
| 3 | DMRS configuration 2, multiple access manner 2 |
| 4 | DMRS configuration 3 |
| 5 | DMRS configuration 4 |
| 6 | DMRS configuration 5 |
| 7 | DMRS configuration 6 |

It can be seen that when the DMRS configuration indication information is 0, it is indicated that the terminal device adopts the DMRS configuration 1 and uses the multiple access manner 1; when the DMRS configuration indication information is 1, it is indicated that the terminal device adopts the DMRS configuration 1 and uses the multiple access manner 2; when the DMRS configuration indication information is 2, it is indicated that the terminal device adopts the DMRS configuration 2 and uses the multiple access manner 1; when the DMRS configuration indication information is 3, it is indicated that the terminal device adopts the DMRS configuration 2 and uses the multiple access manner 2; when the DMRS configuration indication information is 4, it is indicated that the terminal device adopts the DMRS configuration 3; when the DMRS configuration indication information is 5, it is indicated that the terminal device adopts the DMRS configuration 4; when the DMRS configuration indication information is 6, it is indicated that the terminal device adopts the DMRS configuration 5; and when the DMRS configuration indication information is 7, it is indicated that the terminal device adopts the DMRS configuration 6.

Herein, the DMRS configuration includes, for example, at least one of a cyclic shift configuration or an OCC configuration.

Optionally, the operation that the terminal device determines the uplink multiple access manner for the terminal device according to the information carried in the DCI includes that: the terminal device determines the uplink multiple access manner according to a value of an NDI bit, which is carried in the DCI, of a disabled codeword.

The NDI bit, when the number of transmission layers is greater than 1 or the disabled codeword is enabled, may be configured to indicate whether data transmitted by the disabled codeword is retransmission data.

For example, a meaning of the NDI bit may be determined in a manner illustrated in Table 3.

**Table 3**

| Number of transmission layers | Content indicated by the NDI bit |
|---|---|
| Equal to 1 | The value of the NDI bit is 0, an uplink multiple access manner 1 is indicated |
| | The value of the NDI bit is 1, an uplink multiple access manner 2 is indicated |
| Greater than 1 | The value of the NDI bit is 0, it is indicated that the data transmitted by the codeword is retransmission data |
| | The value of the NDI bit is 1, it is indicated that the data transmitted by the codeword is data transmitted for the first time |

Optionally, the operation that the terminal device determines the uplink multiple access manner for the terminal device according to the information carried in the DCI includes that: the terminal device determines the uplink multiple access manner according to MCS indication information, which is carried in the DCI, of the disabled codeword.

The MCS indication information, when the number of transmission layers is greater than 1 or the disabled codeword is enabled, may be configured to indicate an MCS for the data transmitted by the disabled codeword.

For example, when the number of transmission layers is 1, if the MCS indication information of the disabled codeword is A, it may be indicated that the uplink multiple access manner for the terminal device is the uplink multiple access manner 1; and if the MCS indication information of the disabled codeword is B, it may be indicated that the uplink multiple access manner for the terminal device is the uplink multiple access manner 2.

Optionally, the operation that the terminal device determines the uplink multiple access manner for the terminal device according to the information carried in the DCI includes that: the terminal device determines the uplink multiple access manner according to RI information carried in the DCI, here, the RI information is obtained by jointly coding a value of an RI and information on the uplink multiple access manner.

That is, before the operation that the network device sends the RI information carried in the DCI to the terminal device, the method further includes that: the network device jointly codes the value of the RI and the uplink multiple access manner to obtain the RI information.

If the RI information carried in the DCI is 2 bits and a maximum value of RI supported by the terminal device is 2, contents indicated by different RI information may be illustrated, for example, in Table 4.

**Table 4**

| RI information | Content indicated by the RI information |
|---|---|
| 0 | RI=1, the uplink multiple access manner 1 is indicated |
| 1 | RI=1, the uplink multiple access manner 2 is indicated |
| 2 | RI=2 |
| 3 | Reserved |

Optionally, the operation that the terminal device determines the uplink multiple access manner for the terminal device according to the information carried in the DCI includes that: the terminal device determines the uplink multiple access manner according to a value of padding bit(s) carried in the DCI.

Herein, the padding bit(s) is/are redundant bit(s) added into the DCI to keep a length the same as that of another DCI format.

Optionally, the operation that the terminal device determines the uplink multiple access manner for the terminal device according to the information carried in the DCI includes that: the terminal device determines the uplink multiple access manner according to the physical resource configuration manner indication information carried in the DCI.

In the embodiment of the disclosure, the abovementioned modes are adopted to indicate the uplink multiple access manner for the terminal device and no dedicated bit is required to be added into the DCI to indicate the uplink multiple access manner, so that increase of a payload of the DCI is avoided and detection performance of the DCI is improved.

It is to be understood that Table 2 to Table 4 and correspondences between parameters adopted in processes that the terminal device determines the number of transmission layers, the physical resource configuration manner and the uplink multiple access manner, for example, correspondences between the number of DMRS ports and the number of transmission layers and correspondences between values of DMRS configuration indication information and both DMRS configurations and uplink multiple access manners, may be predetermined by the network device and the terminal device, for example, specified according to the protocol, and may also be independently determined and notified to the terminal device by the network device. There are no limits made thereto in the embodiments of the disclosure.

A second condition: the transmission information includes the physical resource configuration manner.

Optionally, the operation that the terminal device determines the uplink multiple access manner for the terminal device according to the physical resource configuration manner includes that: the terminal device determines the uplink multiple access manner according to the physical resource configuration manner and correspondences between physical resource configuration manners and uplink multiple access manners.

For example, when the physical resource configuration manner indicated in the DCI is Type 0, the terminal device adopts the uplink multiple access manner 1; and when the physical resource configuration manner indicated in the DCI is Type 1, the terminal device adopts the uplink multiple access manner 2.

Herein, the correspondences between the physical resource configuration manners and the uplink multiple access manners may be predetermined by the network device and the terminal device, for example, specified according to the protocol, and may also be independently determined and notified to the terminal device by the network device. There are no limits made herein.

A third condition: the transmission information includes the number of transmission layers and the physical resource configuration manner.

Optionally, the terminal device, responsive to it is determined that the number of transmission layers is 1, determines the uplink multiple access manner for the terminal device according to the physical resource configuration manner indicated in the DCI. Specifically, the terminal device may determine the uplink multiple access manner according to the physical resource configuration manner and correspondences between physical resource configuration manners and uplink multiple access manners.

For example, when the physical resource configuration manner indicated in the DCI is Type 0, the terminal device adopts the uplink multiple access manner 1; and when the physical resource configuration manner indicated in the DCI is Type 1, the terminal device adopts the uplink multiple access manner 2. Optionally, the terminal device, responsive to it is determined that the number of transmission layers is greater than 1, adopts the uplink multiple access manner, that is predetermined by the terminal device and the network device, as the uplink multiple access manner for transmission of an uplink signal.

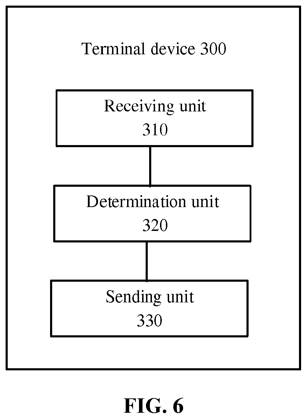

In the embodiment, the terminal device determines at least one of the number of transmission layers or the physical resource configuration manner through the parameter indication information in the DCI and determines the uplink multiple access manner according to the at least one of the number of transmission layers or the physical resource configuration manner, so that the network device may flexibly regulate the uplink multiple access manner adopted for the terminal device during single-layer transmission. FIG. 6 is a schematic block diagram of a terminal device 300 according to an embodiment of the disclosure. As illustrated in FIG. 6, the terminal device 300 includes a receiving unit 310, a determination unit 320 and a sending unit 330.

The receiving unit 310 is configured to receive DCI sent by a network device.

The determination unit 320 is configured to determine an uplink multiple access manner for the terminal device according to a DCI format of the DCI or determine an uplink multiple access manner for the terminal device according to parameter indication information carried in the DCI.

The sending unit 330 is configured to transmit uplink data according to the uplink multiple access manner determined by the determination unit 320.

In the embodiment of the disclosure, the terminal device determines the uplink multiple access manner for the terminal device through the DCI format of the DCI or the parameter indication information in the DCI, so that the network device may flexibly regulate the uplink multiple access manner adopted for the terminal device.

Optionally, the determination unit 320 is specifically configured to determine the uplink multiple access manner for the terminal device according to the DCI format of the DCI and correspondences between DCI formats and uplink multiple access manners.

Optionally, the determination unit 320 is specifically configured to: determine transmission information of the terminal device according to the parameter indication information, here, the transmission information includes at least one of a total number of transmission layers or a physical resource configuration manner for the terminal device; and determine the uplink multiple access manner for the terminal device according to the transmission information determined by the determination unit.

Optionally, the parameter indication information includes at least one of: information for indicating a total number of transmission layers, physical resource configuration manner indication information, DMRS port indication information, PMI information, or codeword indication information.

Optionally, the transmission information includes the total number of transmission layers for the terminal device, and the determination unit 320 is specifically configured to, responsive to it is determined that the total number of transmission layers is 1, determine the uplink multiple access manner for the terminal device according to information carried in the DCI.

Optionally, the determination unit 320 is specifically configured to determine the uplink multiple access manner according to DMRS configuration indication information carried in the DCI, here, the DMRS configuration indication information is obtained by jointly coding information on a DMRS configuration and information on the uplink multiple access manner.

Optionally, the determination unit 320 is specifically configured to determine the uplink multiple access manner according to a value of an NDI bit, which is carried in the DCI, of a disabled codeword.

Optionally, the determination unit 320 is specifically configured to determine the uplink multiple access manner according to MCS indication information, which is carried in the DCI, of the disabled codeword.

Optionally, the determination unit 320 is specifically configured to determine the uplink multiple access manner according to RI information carried in the DCI, here, the RI information is obtained by jointly coding a value of an RI and information on the uplink multiple access manner.

Optionally, the determination unit 320 is specifically configured to determine the uplink multiple access manner according to a value of a padding bit carried in the DCI.

Optionally, the determination unit 320 is specifically configured to determine the uplink multiple access manner according to the physical resource configuration manner indication information carried in the DCI.

Optionally, the transmission information includes the total number of transmission layers for the terminal device, and the determination unit 320 is specifically configured to, responsive to it is determined that the total number of transmission layers is greater than 1, determine that the uplink multiple access manner is an uplink multiple access manner that is predetermined by both the terminal device and the network device.

Optionally, the transmission information includes the physical resource configuration manner for the terminal device, and the determination unit 320 is specifically configured to determine the uplink multiple access manner according to the physical resource configuration manner and correspondences between physical resource configuration manners and uplink multiple access manners.

Optionally, the uplink multiple access manner includes one of: DFT-S-OFDM, CP-OFDM, SC-FDMA or OFDMA.

Optionally, the sending unit 330 is specifically configured to, responsive to it is determined that the uplink multiple access manner is DFT-S-OFDM or SC-FDMA, perform DFT on the uplink data and transmit in an uplink data channel the uplink data on which the DFT has been performed.

Optionally, the sending unit 330 is specifically configured to, responsive to it is determined that the uplink multiple access manner is CP-OFDM or OFDMA, forbid performing a DFT on the uplink data and transmit in the uplink data channel the uplink data on which no DFT has been performed.

Optionally, the sending unit 330 is specifically configured to: determine a target uplink data channel structure according to the uplink multiple access manner and correspondences between uplink multiple access manners and uplink data channel structures; and transmit the uplink data according to the target uplink data channel structure.

Optionally, the uplink data channel structure includes at least one of: a resource location of DMRS for the uplink data channel, a DMRS sequence for the uplink data channel, a transmission manner for the uplink data carried in the uplink data channel, a time-domain resource occupied by the uplink data channel, or a frequency-domain resource occupied by the uplink data channel.

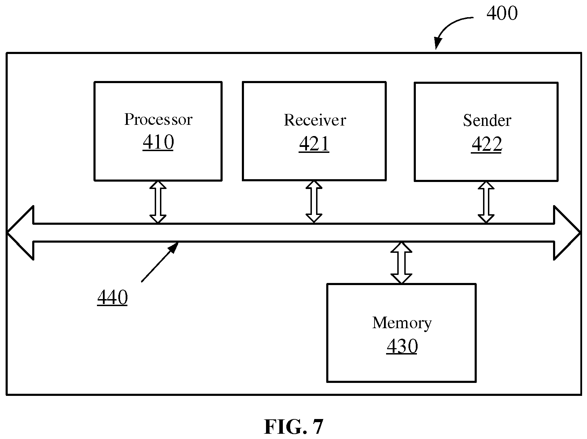

It is to be noted that, in the embodiment of the disclosure, the receiving module 310 may be implemented by a receiver, the sending unit 330 may be implemented by a sender and the determination unit 320 may be implemented by a processor. As illustrated in FIG. 7, a terminal device 400 may include a processor 410, a transceiver 420 and a memory 430. The transceiver 420 may include a receiver 421 and a sender 422. The memory 430 may be configured to store information related to parameter information, transmission information and multiple access manners and the like, and may further be configured to store a code executed by the processor 410 and the like. Each component in the terminal device 400 is coupled together through a bus system 440. The bus system 440 includes a data bus, and further includes a power bus, a control bus, a state signal bus and the like.

Herein, the receiver 421 is configured to receive DCI sent by a network device.

The processor 410 is configured to determine an uplink multiple access manner for the terminal device according to a DCI format of the DCI received by the receiver 421 or determine an uplink multiple access manner for the terminal device according to parameter indication information carried in the DCI.

The sender 422 is configured to transmit uplink data according to the uplink multiple access manner determined by the processor 410.

In such a manner, the terminal device determines the uplink multiple access manner for the terminal device through the DCI format of the DCI or the parameter indication information in the DCI, so that the network device may flexibly regulate the uplink multiple access manner adopted for the terminal device.

Optionally, the processor 410 is specifically configured to determine the uplink multiple access manner for the terminal device according to the DCI format of the DCI and correspondences between DCI formats and uplink multiple access manners.

Optionally, the processor 410 is specifically configured to: determine transmission information of the terminal device according to the parameter indication information, here, the transmission information includes at least one of a total number of transmission layers or a physical resource configuration manner for the terminal device; and determine the uplink multiple access manner for the terminal device according to the transmission information determined by the processor.

Optionally, the parameter indication information includes at least one of: information for indicating a total number of transmission layers, physical resource configuration manner indication information, DMRS port indication information, PMI information, or codeword indication information.

Optionally, the transmission information includes the total number of transmission layers for the terminal device, and the processor 410 is specifically configured to, responsive to it is determined that the total number of transmission layers is 1, determine the uplink multiple access manner for the terminal device according to information carried in the DCI.

Optionally, the processor 410 is specifically configured to determine the uplink multiple access manner according to DMRS configuration indication information carried in the DCI, here, the DMRS configuration indication information is obtained by jointly coding information on a DMRS configuration and information on the uplink multiple access manner.

Optionally, the processor 410 is specifically configured to determine the uplink multiple access manner according to a value of an NDI bit, which is carried in the DCI, of a disabled codeword.

Optionally, the processor 410 is specifically configured to determine the uplink multiple access manner according to MCS indication information, which is carried in the DCI, of the disabled codeword.

Optionally, the processor 410 is specifically configured to determine the uplink multiple access manner according to RI information carried in the DCI, here, the RI information is obtained by jointly coding a value of an RI and information on the uplink multiple access manner.

Optionally, the processor 410 is specifically configured to determine the uplink multiple access manner according to a value of a padding bit carried in the DCI.

Optionally, the processor 410 is specifically configured to determine the uplink multiple access manner according to the physical resource configuration manner indication information carried in the DCI.

Optionally, the transmission information includes the total number of transmission layers for the terminal device, and the processor 410 is specifically configured to, responsive to it is determined that the total number of transmission layers is greater than 1, determine that the uplink multiple access manner is an uplink multiple access manner that is predetermined by both the terminal device and the network device.

Optionally, the transmission information includes the physical resource configuration manner for the terminal device, and the processor 410 is specifically configured to determine the uplink multiple access manner according to the physical resource configuration manner and correspondences between physical resource configuration manners and uplink multiple access manners.

Optionally, the uplink multiple access manner includes one of: DFT-S-OFDM, CP-OFDM, SC-FDMA or OFDMA.

Optionally, the sender 422 is specifically configured to, responsive to it is determined that the uplink multiple access manner is DFT-S-OFDM or SC-FDMA, perform DFT on the uplink data and transmit in an uplink data channel the uplink data on which the DFT has been performed.

Optionally, the sender 422 is specifically configured to, responsive to it is determined that the uplink multiple access manner is CP-OFDM or OFDMA, forbid performing a DFT on the uplink data and transmit in the uplink data channel the uplink data on which no DFT has been performed.

Optionally, the sender 422 is specifically configured to: determine a target uplink data channel structure according to the uplink multiple access manner and correspondences between uplink multiple access manners and uplink data channel structures; and transmit the uplink data according to the target uplink data channel structure.

Optionally, the uplink data channel structure includes at least one of: a resource location of DMRS for the uplink data channel, a DMRS sequence for the uplink data channel, a transmission manner for the uplink data carried in the uplink data channel, a time-domain resource occupied by the uplink data channel, or a frequency-domain resource occupied by the uplink data channel.

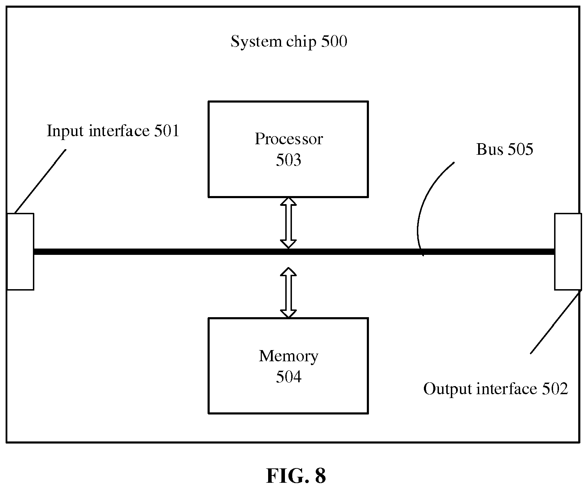

FIG. 8 is a schematic structure diagram of a system chip according to an embodiment of the disclosure. The system chip 500 of FIG. 8 includes an input interface 501, an output interface 502, at least one processor 503 and a memory 504. The input interface 501, the output interface 502, the processor 503 and the memory 504 are connected through a bus 505. The processor 503 is configured to execute a code in the memory 504. When the code is executed, the processor 503 may implement the method executed by the terminal device in FIG. 2 to FIG. 5. The bus 505 is only an example of a connecting manner. In the embodiment of the disclosure, the input interface 501, the output interface 502, the processor 503 and the memory 504 may also be connected in another manner. There are no limits made thereto.

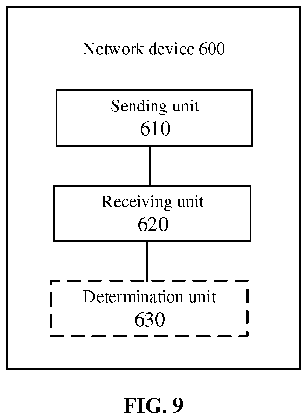

FIG. 9 is a schematic block diagram of a network device 600 according to an embodiment of the disclosure. As illustrated in FIG. 9, the network device 600 includes a sending unit 610 and a receiving unit 620.

The sending unit 610 is configured to send DCI to a terminal device, so that the terminal device determines an uplink multiple access manner for the terminal device according to a DCI format of the DCI or parameter indication information carried in the DCI.

The receiving unit 620 is configured to receive uplink data transmitted by the terminal device according to the uplink multiple access manner.

In the embodiment of the disclosure, the network device sends the DCI to the terminal device to enable the terminal device to determine the uplink multiple access manner for the terminal device according to the DCI format of the DCI or the parameter indication information carried in the DCI, so that the network device may flexibly regulate the uplink multiple access manner adopted for the terminal device.

Optionally, the network device further includes a determination unit 630, configured to, before the sending unit 610 sends the DCI to the terminal device, determine correspondences between DCI formats and uplink multiple access manners; and the sending unit 610 is further configured to send the correspondences between the DCI formats and the uplink multiple access manners to the terminal device, so that the terminal device determines the uplink multiple access manner for the terminal device according to the DCI format of the DCI and the correspondences between the DCI formats and the uplink multiple access manners.

Optionally, the network device further includes the determination unit 630, configured to, before the sending unit 610 sends the DCI to the terminal device, determine the parameter indication information carried in the DCI, here, the parameter indication information is used for the terminal device to determine transmission information of the terminal device to enable the terminal device to determine the uplink multiple access manner for the terminal device according to the transmission information and the transmission information includes at least one of a total number of transmission layers or a physical resource configuration manner for the terminal device.

Optionally, the parameter indication information includes at least one of: information for indicating a total number of transmission layers, physical resource configuration manner indication information, DMRS port indication information, PMI information, or codeword indication information.

Optionally, the transmission information includes the total number of transmission layers for the terminal device to enable the terminal device to, responsive to it is determined that the total number of transmission layers is 1, determine the uplink multiple access manner according to information carried in the DCI.

Optionally, the information carried in the DCI includes DMRS configuration indication information, the network device further includes a processing unit, and before the sending unit 620 sends the information carried in the DCI to the terminal device, the processing unit is configured to jointly code information on a DMRS configuration and information on the uplink multiple access manner to obtain the DMRS configuration indication information.

Optionally, the information carried in the DCI includes a value of an NDI bit of a disabled codeword.

Optionally, the information carried in the DCI includes MCS indication information of the disabled codeword.

Optionally, the information carried in the DCI includes RI information, the network device further includes the processing unit, and before the sending unit 620 sends the information carried in the DCI to the terminal device, the processing unit is configured to jointly code a value of an RI and information on the uplink multiple access manner to obtain the RI information.

Optionally, the information carried in the DCI includes a value of a padding bit.

Optionally, the information carried in the DCI includes the physical resource configuration manner indication information.

Optionally, the transmission information includes the total number of transmission layers for the terminal device to enable the terminal device to, responsive to it is determined that the total number of transmission layers is greater than 1, determine that the uplink multiple access manner is an uplink multiple access manner that is predetermined by the terminal device and the network device.

Optionally, the transmission information includes the physical resource configuration manner for the terminal device to enable the terminal device to determine the uplink multiple access manner according to the physical resource configuration manner and correspondences between physical resource configuration manners and uplink multiple access manners.

Optionally, the uplink multiple access manner includes one of: DFT-S-OFDM, CP-OFDM, SC-FDMA, or OFDMA.

Optionally, the receiving unit 630 is specifically configured to receive the uplink data transmitted by the terminal device according to the DFT-S-OFDM or the SC-FDMA, here, the uplink data is uplink data on which a DFT has been performed by the terminal device.

Optionally, the receiving unit 630 is specifically configured to receive the uplink data transmitted by the terminal device according to the CP-OFDM or the OFDMA, here, the uplink data is uplink data on which no DFT has been performed by the terminal device.

Optionally, the receiving unit 630 is specifically configured to receive the uplink data transmitted by the terminal device according to a target uplink data channel structure from, here, the target uplink data channel structure is determined by the terminal device according to the uplink multiple access manner and correspondences between uplink multiple access manners and uplink data channel structures.

Optionally, the uplink data channel structure includes at least one of: a resource location of DMRS for the uplink data channel, a DMRS sequence for the uplink data channel, a transmission manner for the uplink data carried in the uplink data channel, a time-domain resource occupied by the uplink data channel, or a frequency-domain resource occupied by the uplink data channel.

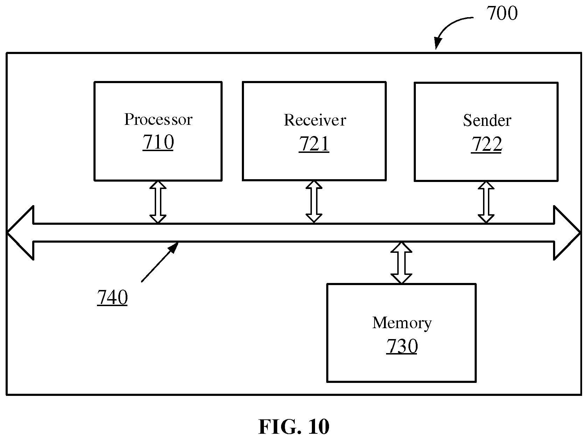

It is to be noted that in the embodiment of the disclosure, the receiving unit 630 may be implemented by a receiver, the sending unit 610 may be implemented by a sender, a determination unit 630 may be implemented by a processor. As illustrated in FIG. 10, a network device 700 may include a processor 710, a transceiver 720 and a memory 730. The transceiver 720 may include a receiver 721 and a sender 722. The memory 730 may be configured to store information related to parameter information, transmission information and multiple access manners and the like, and may further be configured to store a code executed by the processor 710 and the like. Each component in the network device 700 is coupled together through a bus system 740. The bus system 740 includes a data bus, and further includes a power bus, a control bus, a state signal bus and the like.

The sender 722 is configured to send DCI to a terminal device, so that the terminal device determines an uplink multiple access manner for the terminal device according to a DCI format of the DCI or parameter indication information carried in the DCI.

The receiver 721 is configured to receive uplink data transmitted by the terminal device according to the uplink multiple access manner.

In such a manner, the network device sends the DCI to the terminal device to enable the terminal device to determine the uplink multiple access manner for the terminal device according to the DCI format of the DCI or the parameter indication information carried in the DCI, so that the network device may flexibly regulate the uplink multiple access manner adopted for the terminal device.

Optionally, the processor 710 is configured to, before the sender 722 sends the DCI to the terminal device, determine correspondences between DCI formats and an uplink multiple access manners; and the sender is further configured to send the correspondences between the DCI formats and the uplink multiple access manners to the terminal device, so that the terminal device determines the uplink multiple access manner for the terminal device according to the DCI format of the DCI and the correspondences between the DCI formats and the uplink multiple access manners.

Optionally, the processor 710 is configured to, before the sender 722 sends the DCI to the terminal device, determine the parameter indication information carried in the DCI, here, the parameter indication information is used for the terminal device to determine transmission information of the terminal device to enable the terminal device to determine the uplink multiple access manner for the terminal device according to the transmission information and the transmission information includes at least one of a total number of transmission layers or a physical resource configuration manner for the terminal device.

Optionally, the parameter indication information includes at least one of: information for indicating a total number of transmission layers, physical resource configuration manner indication information, DMRS port indication information, PMI information, or codeword indication information.

Optionally, the transmission information includes the total number of transmission layers for the terminal device to enable the terminal device to, responsive to it is determined that the total number of transmission layers is 1, determine the uplink multiple access manner according to information carried in the DCI.

Optionally, the information carried in the DCI includes DMRS configuration indication information, the network device further includes a processing unit, and before the sender 722 sends the information carried in the DCI to the terminal device, the processing unit is configured to jointly code information on a DMRS configuration and information on the uplink multiple access manner to obtain the DMRS configuration indication information.

Optionally, the information carried in the DCI includes a value of an NDI bit of a disabled codeword.

Optionally, the information carried in the DCI includes MCS indication information of the disabled codeword.

Optionally, the information carried in the DCI includes RI information, the network device further includes the processing unit, and before the sender 722 sends the information carried in the DCI to the terminal device, the processing unit is configured to jointly code a value of an RI and information on the uplink multiple access manner to obtain the RI information.

Optionally, the information carried in the DCI includes a value of a padding bit.

Optionally, the information carried in the DCI includes the physical resource configuration manner indication information.

Optionally, the transmission information includes the total number of transmission layers for the terminal device to enable the terminal device to, responsive to it is determined that the total number of transmission layers is greater than 1, determine that the uplink multiple access manner is an uplink multiple access manner that is predetermined by both the terminal device and the network device.

Optionally, the transmission information includes the physical resource configuration manner for the terminal device to enable the terminal device to determine the uplink multiple access manner according to the physical resource configuration manner and correspondences between physical resource configuration manners and uplink multiple access manners.

Optionally, the uplink multiple access manner includes one of: DFT-S-OFDM, CP-OFDM, SC-FDMA, or OFDMA.

Optionally, the receiver 721 is specifically configured to receive the uplink data transmitted by the terminal device according to the DFT-S-OFDM or the SC-FDMA, here, the uplink data is uplink data on which a DFT has been performed by the terminal device.

Optionally, the receiver 721 is specifically configured to receive the uplink data transmitted by the terminal device according to the CP-OFDM or the OFDMA, here, the uplink data is uplink data on which no DFT has been performed by the terminal device.

Optionally, the receiver 721 is specifically configured to receive the uplink data transmitted by the terminal device according to a target uplink data channel structure, here, the target uplink data channel structure is determined by the terminal device according to the uplink multiple access manner and correspondences between uplink multiple access manners and uplink data channel structures.

Optionally, the uplink data channel structure includes at least one of: a resource location of DMRS for the uplink data channel, a DMRS sequence for the uplink data channel, a transmission manner for the uplink data carried in the uplink data channel, a time-domain resource occupied by the uplink data channel, or a frequency-domain resource occupied by the uplink data channel.

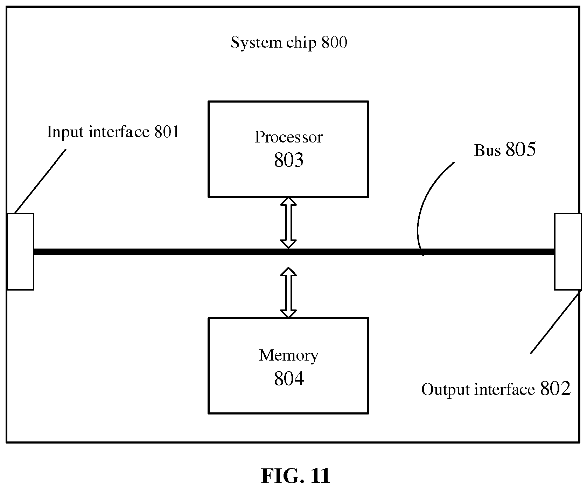

FIG. 11 is a schematic structure diagram of a system chip according to an embodiment of the disclosure. The system chip 800 of FIG. 11 includes an input interface 801, an output interface 802, at least one processor 803 and a memory 804. The input interface 801, the output interface 802, the processor 803 and the memory 804 are connected through a bus 805. The processor 803 is configured to execute a code in the memory 804. When the code is executed, the processor 803 implements the method executed by the network device in FIG. 2 to FIG. 5. The bus 805 is only an example of a connecting manner. In the embodiment of the disclosure, the input interface 801, the output interface 802, the processor 803 and the memory 804 may also be connected in another manner. There are no limits made herein.

It is to be understood that term "and/or" in the disclosure is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

It is to be understood that, in various embodiments of the disclosure, a magnitude of a sequence number of each process does not mean an execution sequence and the execution sequence of each process should be determined by its function and an internal logic and should not form any limit to an implementation process of the embodiments of the disclosure.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

In some embodiments provided by the application, it is to be understood that the disclosed system, device and method may be implemented in another manner. For example, the device embodiment described above is only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the devices or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected according to a practical requirement to achieve the purposes of the solutions of the embodiments.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may be stored in a computer-readable storage medium. Based on such an understanding, the technical solutions of the disclosure substantially or parts making contributions to a conventional art or part of the technical solutions may be embodied in form of software product, and the computer software product is stored in a storage medium, including a plurality of instructions configured to enable a computer device (which may be a personal computer, a server, a network device or the like) to execute all or part of the operations of the method in each embodiment of the disclosure. The storage medium includes various media capable of storing program codes such as a U disk, a mobile hard disk, a Read-Only Memory (ROM), a Random Access Memory (RAM), a magnetic disk or an optical disc.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for uplink data transmission, comprising:
receiving (220), by a terminal device, Downlink Control Information, DCI, sent by a network device;
determining (230), by the terminal device, that an uplink multiple access manner for the terminal device is Discrete Fourier Transformation Spread Orthogonal Frequency Division Multiplexing, DFT-S-OFDM, or Cyclic Prefix Orthogonal Frequency Division Multiplexing, CP-OFDM, according to a first DCI format and a second DCI format of the DCI, wherein the first DCI format is different from the second DCI format, and the first DCI format and the second DCI format correspond to different control information lengths; and
transmitting (240), by the terminal device, uplink data according to the uplink multiple access manner DFT-S-OFDM or CP-OFDM.

2. The method of claim 1, wherein determining, by the terminal device, that the uplink multiple access manner for the terminal device is DFT-S-OFDM or CP-OFDM according to the first DCI format and the second DCI format of the DCI further comprises:
determining (231), by the terminal device, that the uplink multiple access manner for the terminal device is DFT-S-OFDM or CP-OFDM, according to the first DCI format and the second DCI format of the DCI and correspondences between the first DCI format and an uplink multiple access manner and between the second DCI format and an uplink multiple access manner.

3. The method of any one of claims 1-2, wherein transmitting, by the terminal device, the uplink data according to the uplink multiple access manner DFT-S-OFDM or CP-OFDM comprises:
responsive to it is determined by the terminal device that the uplink multiple access manner is DFT-S-OFDM, performing, by the terminal device, a Discrete Fourier Transformation, DFT, on the uplink data and transmitting in an uplink data channel the uplink data on which the DFT has been performed.

4. The method of any one of claims 1-2, wherein transmitting, by the terminal device, the uplink data according to the uplink multiple access manner DFT-S-OFDM or CP-OFDM comprises:
responsive to it is determined by the terminal device that the uplink multiple access manner is CP-OFDM, forbidding, by the terminal device, performing a DFT on the uplink data and transmitting in an uplink data channel the uplink data on which no DFT has been performed.

5. The method of any one of claims 1-4, wherein transmitting, by the terminal device, the uplink data according to the uplink multiple access manner DFT-S-OFDM or CP-OFDM further comprises:
determining, by the terminal device, a target uplink data channel structure according to the uplink multiple access manner and correspondences between uplink multiple access manners and uplink data channel structures; and
transmitting, by the terminal device, the uplink data according to the target uplink data channel structure.

6. The method of claim 5, wherein the uplink data channel structure comprises at least one of:
a resource location of DMRS for the uplink data channel, a DMRS sequence for the uplink data channel, a transmission manner for the uplink data in the uplink data channel, a time-domain resource occupied by the uplink data channel, or a frequency-domain resource occupied by the uplink data channel.

7. A method for uplink data transmission, comprising:
sending (210), by a network device, Downlink Control Information, DCI, to a terminal device, a first DCI format and a second DCI format of the DCI being different, the first DCI format and the second DCI format corresponding to different control information lengths, and the first DCI format and the second DCI format of the DCI being used by the terminal device to determine that an uplink multiple access manner for the terminal device is Discrete Fourier Transformation Spread Orthogonal Frequency Division Multiplexing, DFT-S-OFDM, or Cyclic Prefix Orthogonal Frequency Division Multiplexing, CP-OFDM; and
receiving (250), by the network device, uplink data transmitted by the terminal device according to the uplink multiple access manner.

8. The method of claim 7, wherein receiving, by the network device, the uplink data transmitted by the terminal device according to the uplink multiple access manner further
comprises:
receiving, by the network device, the uplink data transmitted by terminal device according to a target uplink data channel structure, the target uplink data channel structure being determined by the terminal device according to the uplink multiple access manner and correspondences between uplink multiple access manners and uplink data channel structures.

9. The method of claim 8, wherein the uplink data channel structure comprises at least one of:
a resource location of DMRS for the uplink data channel, a DMRS sequence for the uplink data channel, a transmission manner for the uplink data in the uplink data channel, a time-domain resource occupied by the uplink data channel, or a frequency-domain resource occupied by the uplink data channel.

10. A terminal device, comprising:
a receiving unit (310), configured to receive Downlink Control Information, DCI, sent by a network device;
a determination unit (320), configured to determine that an uplink multiple access manner for the terminal device is Discrete Fourier Transformation Spread Orthogonal Frequency Division Multiplexing, DFT-S-OFDM, or Cyclic Prefix Orthogonal Frequency Division Multiplexing, CP-OFDM, according to a first DCI format and a second DCI format of the DCI received by the receiving unit, wherein the first DCI format is different from the second DCI format, and the first DCI format and the second DCI format correspond to different control information lengths; and
a sending unit (330), configured to transmit uplink data according to the uplink multiple access manner DFT-S-OFDM or CP-OFDM determined by the determination unit.

11. The terminal device of claim 10, wherein the determination unit (320) is specifically further configured to:
determine that the uplink multiple access manner for the terminal device is DFT-S-OFDM or CP-OFDM, according to the first DCI format and the second DCI format of the DCI and correspondences between the first DCI format and an uplink multiple access manner and between the second DCI format and an uplink multiple access manner.

12. The terminal device of any one of claims 10-11, wherein the sending unit (330) is specifically configured to:
responsive to it is determined that the uplink multiple access manner is DFT-S-OFDM, perform a Discrete Fourier Transformation, DFT, on the uplink data and transmit in an uplink data channel the uplink data on which the DFT has been performed.

13. The terminal device of any one of claims 10-11, wherein the sending unit (330) is specifically configured to:
responsive to it is determined that the uplink multiple access manner is CP-OFDM, forbid performing a DFT on the uplink data and transmit in an uplink data channel the uplink data on which no DFT has been performed.

14. The terminal device of any one of claims 10-13, wherein the sending unit (330) is specifically further configured to:
determine a target uplink data channel structure according to the uplink multiple access manner and correspondences between uplink multiple access manners and uplink data channel structures; and
transmit the uplink data according to the target uplink data channel structure.

15. The terminal device of claim 14, wherein the uplink data channel structure comprises at least one of:
a resource location of DMRS for the uplink data channel, a DMRS sequence for the uplink data channel, a transmission manner for the uplink data in the uplink data channel, a time-domain resource occupied by the uplink data channel, or a frequency-domain resource occupied by the uplink data channel.

16. A network device comprising:
a sending unit (610), configured to send Downlink Control Information, DCI, to a terminal device, a first DCI format and a second DCI format of the DCI being different, the first DCI format and the second DCI format corresponding to different control information lengths, and the first DCI format and the second DCI format of the DCI being used by the terminal device to determine that an uplink multiple access manner for the terminal device is Discrete Fourier Transformation Spread Orthogonal Frequency Division Multiplexing, DFT-S-OFDM, or Cyclic Prefix Orthogonal Frequency Division Multiplexing, CP-OFDM; and
a receiving unit (620), configured to receive uplink data transmitted by the terminal device according to the uplink multiple access manner.

17. The network device of claim 16, wherein the receiving unit (620) is specifically further configured to:
receive the uplink data transmitted by terminal device according to a target uplink data channel structure, the target uplink data channel structure being determined by the terminal device according to the uplink multiple access manner and correspondences between uplink multiple access manners and uplink data channel structures.

18. The network device of claim 17, wherein the uplink data channel structure comprises at least one of:
a resource location of DMRS for the uplink data channel, a DMRS sequence for the uplink data channel, a transmission manner for the uplink data in the uplink data channel, a time-domain resource occupied by the uplink data channel, or a frequency-domain resource occupied by the uplink data channel.

## Patentansprüche

1. Verfahren zur Uplink-Datenübertragung, das Folgendes umfasst:
Empfangen (220), durch eine Endgerätevorrichtung, von durch eine Netzvorrichtung gesendeten Downlink-Steuerinformationen, DCI;
Bestimmen (230), durch die Endgerätevorrichtung, dass eine Uplink-Mehrfachzugriffsweise für die Endgerätevorrichtung Diskrete-Fouriertransformationgespreiztes Orthogonal-Frequenzmultiplexing, DFT-S-OFDM, oder Zyklisches-Präfix-Orthogonal-Frequenzmultiplexing, CP-OFDM, ist, gemäß einem ersten DCI-Format und einem zweiten DCI-Format der DCI, wobei sich das erste DCI-Format von dem zweiten DCI-Format unterscheidet und das erste DCI-Format und das zweite DCI-Format unterschiedlichen Steuerinformationslängen entsprechen; und
Übertragen (240), durch die Endgerätevorrichtung, von Uplink-Daten gemäß der Uplink-Mehrfachzugriffsweise DFT-S-OFDM oder CP-OFDM.

2. Verfahren nach Anspruch 1, wobei das Bestimmen, durch die Endgerätevorrichtung, dass die Uplink-Mehrfachzugriffsweise für die Endgerätevorrichtung DFT-S-OFDM oder CP-OFDM ist, gemäß dem ersten DCI-Format und dem zweiten DCI-Format der DCI ferner Folgendes umfasst:
Bestimmen (231), durch die Endgerätevorrichtung, dass die Uplink-Mehrfachzugriffsweise für die Endgerätevorrichtung DFT-S-OFDM oder CP-OFDM ist, gemäß dem ersten DCI-Format und dem zweiten DCI-Format der DCI und Entsprechungen zwischen dem ersten DCI-Format und einer Uplink-Mehrfachzugriffsweise und zwischen dem zweiten DCI-Format und einer Uplink-Mehrfachzugriffsweise.

3. Verfahren nach einem der Ansprüche 1-2, wobei das Übertragen, durch die Endgerätevorrichtung, der Uplink-Daten gemäß der Uplink-Mehrfachzugriffsweise DFT-S-OFDM oder CP-OFDM Folgendes umfasst:
als Reaktion darauf, dass durch die Endgerätevorrichtung bestimmt wird, dass die Uplink-Mehrfachzugriffsweise DFT-S-OFDM ist, Durchführen, durch die Endgerätevorrichtung, einer diskreten Fouriertransformation, DFT, an den Uplink-Daten und Übertragen, in einem Uplink-Datenkanal, der Uplink-Daten, an denen die DFT durchgeführt wurde.

4. Verfahren nach einem der Ansprüche 1-2, wobei das Übertragen, durch die Endgerätevorrichtung, der Uplink-Daten gemäß der Uplink-Mehrfachzugriffsweise DFT-S-OFDM oder CP-OFDM Folgendes umfasst:
als Reaktion darauf, dass durch die Endgerätevorrichtung bestimmt wird, dass die Uplink-Mehrfachzugriffsweise CP-OFDM ist, Untersagen, durch die Endgerätevorrichtung, des Durchführens einer DFT an den Uplink-Daten und Übertragen, in einem Uplink-Datenkanal, der Uplink-Daten, an denen keine DFT durchgeführt wurde.

5. Verfahren nach einem der Ansprüche 1-4, wobei das Übertragen, durch die Endgerätevorrichtung, der Uplink-Daten gemäß der Uplink-Mehrfachzugriffsweise DFT-S-OFDM oder CP-OFDM ferner Folgendes umfasst:
Bestimmen, durch die Endgerätevorrichtung, einer Ziel-Uplink-Datenkanalstruktur gemäß der Uplink-Mehrfachzugriffsweise und Entsprechungen zwischen Uplink-Mehrfachzugriffsweisen und Uplink-Datenkanalstrukturen; und
Übertragen, durch die Endgerätevorrichtung, der Uplink-Daten gemäß der Ziel-Uplink-Datenkanalstruktur.

6. Verfahren nach Anspruch 5, wobei die Uplink-Datenkanalstruktur mindestens eines von Folgendem umfasst:
einen Ressourcenort von DMRS für den Uplink-Datenkanal,
eine DMRS-Sequenz für den Uplink-Datenkanal, eine Übertragungsweise für die Uplink-Daten in dem Uplink-Datenkanal, eine durch den Uplink-Datenkanal eingenommene Zeitbereichsressource oder eine durch den Uplink-Datenkanal eingenommene Frequenzbereichsressource.

7. Verfahren zur Uplink-Datenübertragung, das Folgendes umfasst:
Senden (210), durch eine Netzvorrichtung, von Downlink-Steuerinformationen, DCI, an eine Endgerätevorrichtung, wobei sich ein erstes DCI-Format und ein zweites DCI-Format der DCI unterscheiden, das erste DCI-Format und das zweite DCI-Format unterschiedlichen Steuerinformationslängen entsprechen und das erste DCI-Format und das zweite DCI-Format der DCI durch die Endgerätevorrichtung verwendet werden, um zu bestimmen, dass eine Uplink-Mehrfachzugriffsweise für die Endgerätevorrichtung Diskrete-Fouriertransformationgespreiztes Orthogonal-Frequenzmultiplexing, DFT-S-OFDM, oder Zyklisches-Präfix-Orthogonal-Frequenzmultiplexing, CP-OFDM, ist; und
Empfangen (250), durch die Netzvorrichtung, von durch die Endgerätevorrichtung übertragenen Uplink-Daten gemäß der Uplink-Mehrfachzugriffsweise.

8. Verfahren nach Anspruch 7, wobei das Empfangen, durch die Netzvorrichtung, der durch die Endgerätevorrichtung übertragenen Uplink-Daten gemäß der Uplink-Mehrfachzugriffsweise ferner Folgendes umfasst:
Empfangen, durch die Netzvorrichtung, der durch die Endgerätevorrichtung übertragenen Uplink-Daten gemäß einer Ziel-Uplink-Datenkanalstruktur, wobei die Ziel-Uplink-Datenkanalstruktur durch die Endgerätevorrichtung gemäß der Uplink-Mehrfachzugriffsweise und Entsprechungen zwischen Uplink-Mehrfachzugriffsweisen und Uplink-Datenkanalstrukturen bestimmt wird.

9. Verfahren nach Anspruch 8, wobei die Uplink-Datenkanalstruktur mindestens eines von Folgendem umfasst:
einen Ressourcenort von DMRS für den Uplink-Datenkanal, eine DMRS-Sequenz für den Uplink-Datenkanal, eine Übertragungsweise für die Uplink-Daten in dem Uplink-Datenkanal, eine durch den Uplink-Datenkanal eingenommene Zeitbereichsressource oder eine durch den Uplink-Datenkanal eingenommene Frequenzbereichsressource.

10. Endgerätevorrichtung, die Folgendes umfasst:
eine Empfangseinheit (310), ausgelegt zum Empfangen von durch eine Netzvorrichtung gesendeten Downlink-Steuerinformationen, DCI;
eine Bestimmungseinheit (320), ausgelegt zum Bestimmen, dass eine Uplink-Mehrfachzugriffsweise für die Endgerätevorrichtung Diskrete-Fouriertransformationgespreiztes Orthogonal-Frequenzmultiplexing, DFT-S-OFDM, oder Zyklisches-Präfix-Orthogonal-Frequenzmultiplexing, CP-OFDM, ist, gemäß einem ersten DCI-Format und einem zweiten DCI-Format der durch die Empfangseinheit empfangenen DCI, wobei sich das erste DCI-Format von dem zweiten DCI-Format unterscheidet und das erste DCI-Format und das zweite DCI-Format unterschiedlichen Steuerinformationslängen entsprechen; und
eine Sendeeinheit (330), ausgelegt zum Übertragen von Uplink-Daten gemäß der durch die Bestimmungseinheit bestimmten Uplink-Mehrfachzugriffsweise DFT-S-OFDM oder CP-OFDM.

11. Endgerätevorrichtung nach Anspruch 10, wobei die Bestimmungseinheit (320) insbesondere ferner zu Folgendem ausgelegt ist:
Bestimmen, dass die Uplink-Mehrfachzugriffsweise für die Endgerätevorrichtung DFT-S-OFDM oder CP-OFDM ist, gemäß dem ersten DCI-Format und dem zweiten DCI-Format der DCI und Entsprechungen zwischen dem ersten DCI-Format und einer Uplink-Mehrfachzugriffsweise und zwischen dem zweiten DCI-Format und einer Uplink-Mehrfachzugriffsweise.

12. Endgerätevorrichtung nach einem der Ansprüche 10-11, wobei die Sendeeinheit (330) insbesondere zu Folgendem ausgelegt ist:
als Reaktion darauf, dass bestimmt wird, dass die Uplink-Mehrfachzugriffsweise DFT-S-OFDM ist, Durchführen einer diskreten Fouriertransformation, DFT, an den Uplink-Daten und Übertragen, in einem Uplink-Datenkanal, der Uplink-Daten, an denen die DFT durchgeführt wurde.

13. Endgerätevorrichtung nach einem der Ansprüche 10-11, wobei die Sendeeinheit (330) insbesondere zu Folgendem ausgelegt ist:
als Reaktion darauf, dass bestimmt wird, dass die Uplink-Mehrfachzugriffsweise CP-OFDM ist, Untersagen des Durchführens einer DFT an den Uplink-Daten und Übertragen, in einem Uplink-Datenkanal, der Uplink-Daten, an denen keine DFT durchgeführt wurde.

14. Endgerätevorrichtung nach einem der Ansprüche 10-13, wobei die Sendeeinheit (330) insbesondere ferner zu Folgendem ausgelegt ist:
Bestimmen einer Ziel-Uplink-Datenkanalstruktur gemäß der Uplink-Mehrfachzugriffsweise und Entsprechungen zwischen Uplink-Mehrfachzugriffsweisen und Uplink-Datenkanalstrukturen; und
Übertragen der Uplink-Daten gemäß der Ziel-Uplink-Datenkanalstruktur.

15. Endgerätevorrichtung nach Anspruch 14, wobei die Uplink-Datenkanalstruktur mindestens eines von Folgendem umfasst:
einen Ressourcenort von DMRS für den Uplink-Datenkanal, eine DMRS-Sequenz für den Uplink-Datenkanal, eine Übertragungsweise für die Uplink-Daten in dem Uplink-Datenkanal, eine durch den Uplink-Datenkanal eingenommene Zeitbereichsressource oder eine durch den Uplink-Datenkanal eingenommene Frequenzbereichsressource.

16. Netzvorrichtung, die Folgendes umfasst:
eine Sendeeinheit (610), ausgelegt zum Senden von Downlink-Steuerinformationen, DCI, an eine Endgerätevorrichtung, wobei sich ein erstes DCI-Format und ein zweites DCI-Format der DCI unterscheiden, das erste DCI-Format und das zweite DCI-Format unterschiedlichen Steuerinformationslängen entsprechen und das erste DCI-Format und das zweite DCI-Format der DCI durch die Endgerätevorrichtung verwendet werden, um zu bestimmen, dass eine Uplink-Mehrfachzugriffsweise für die Endgerätevorrichtung Diskrete-Fouriertransformation-gespreiztes Orthogonal-Frequenzmultiplexing, DFT-S-OFDM, oder Zyklisches-Präfix-Orthogonal-Frequenzmultiplexing, CP-OFDM, ist; und
eine Empfangseinheit (620), ausgelegt zum Empfangen von durch die Endgerätevorrichtung übertragenen Uplink-Daten gemäß der Uplink-Mehrfachzugriffsweise.

17. Netzvorrichtung nach Anspruch 16, wobei die Empfangseinheit (620) insbesondere ferner zu Folgendem ausgelegt ist:
Empfangen der durch die Endgerätevorrichtung übertragenen Uplink-Daten gemäß einer Ziel-Uplink-Datenkanalstruktur, wobei die Ziel-Uplink-Datenkanalstruktur durch die Endgerätevorrichtung gemäß der Uplink-Mehrfachzugriffsweise und Entsprechungen zwischen Uplink-Mehrfachzugriffsweisen und Uplink-Datenkanalstrukturen bestimmt wird.

18. Netzvorrichtung nach Anspruch 17, wobei die Uplink-Datenkanalstruktur mindestens eines von Folgendem umfasst:
einen Ressourcenort von DMRS für den Uplink-Datenkanal, eine DMRS-Sequenz für den Uplink-Datenkanal, eine Übertragungsweise für die Uplink-Daten in dem Uplink-Datenkanal, eine durch den Uplink-Datenkanal eingenommene Zeitbereichsressource oder eine durch den Uplink-Datenkanal eingenommene Frequenzbereichsressource.

## Revendications

1. Procédé de transmission de données en liaison montante, comprenant les étapes consistant à :
recevoir (220), par un dispositif terminal, une information de commande en liaison descendante (DCI) envoyée par un dispositif de réseau ;
déterminer (230), par le dispositif terminal, qu'un mode d'accès multiple en liaison montante pour le dispositif terminal est un multiplexage par répartition orthogonale de la fréquence à étalement par transformée de Fourier discrète (DFT-S-OFDM) ou un multiplexage par répartition orthogonale de la fréquence avec préfixe cyclique (CP-OFDM) selon un premier format DCI et un second format DCI de la DCI, le premier format DCI étant différent du second format DCI et le premier format DCI et le second format DCI correspondant à différentes longueurs d'information de commande ; et
transmettre (240), par le dispositif terminal, des données en liaison montante selon le mode d'accès multiple en liaison montante DFT-S-OFDM ou CP-OFDM.

2. Procédé selon la revendication 1, dans lequel la détermination, par le dispositif terminal, du fait que le mode d'accès multiple en liaison montante pour le dispositif terminal est DFT-S-OFDM ou CP-OFDM selon le premier format DCI et le second format DCI de la DCI comprend en outre l'étape consistant à :
déterminer (231), par le dispositif terminal, que le mode d'accès multiple en liaison montante pour le dispositif terminal est DFT-S-OFDM ou CP-OFDM selon le premier format DCI et le second format DCI de la DCI et des correspondances entre le premier format DCI et un mode d'accès multiple en liaison montante et le second format DCI et un mode d'accès multiple en liaison montante.

3. Procédé selon l'une quelconque des revendications 1 et 2, dans lequel la transmission, par le dispositif terminal, des données en liaison montante selon le mode d'accès multiple en liaison montante DFT-S-OFDM ou CP-OFDM comprend l'étape consistant à :
en réponse à la détermination, par le dispositif terminal, du fait que le mode d'accès multiple en liaison montante est DFT-S-OFDM, exécuter, par le dispositif terminal, une transformation de Fourier discrète (DFT) sur les données en liaison montante et transmettre, dans un canal de données en liaison montante, les données en liaison montante sur lesquelles la DFT a été exécutée.

4. Procédé selon l'une quelconque des revendications 1 et 2, dans lequel la transmission, par le dispositif terminal, des données en liaison montante selon le mode d'accès multiple en liaison montante DFT-S-OFDM ou CP-OFDM comprend l'étape consistant à :
en réponse à la détermination, par le dispositif terminal, du fait que le mode d'accès multiple en liaison montante est CP-OFDM, interdire, par le dispositif terminal, d'exécuter une DFT sur les données en liaison montante et transmettre, dans un canal de données en liaison montante, les données en liaison montante sur lesquelles aucune DFT n'a été exécutée.

5. Procédé selon l'une quelconque des revendications 1 et 4, dans lequel la transmission, par le dispositif terminal, des données en liaison montante selon le mode d'accès multiple en liaison montante DFT-S-OFDM ou CP-OFDM comprend en outre les étapes consistant à :
déterminer, par le dispositif terminal, une structure de canal de données en liaison montante cible selon le mode d'accès multiple en liaison montante et des correspondances entre des modes d'accès multiple en liaison montante et des structures de canal de données en liaison montante ; et
transmettre, par le dispositif terminal, les données en liaison montante selon la structure de canal de données en liaison montante cible.

6. Procédé selon la revendication 5, dans lequel la structure de canal de données en liaison montante comprend au moins une des structures suivantes :
un emplacement de ressource de DMRS pour le canal de données en liaison montante, une séquence DMRS pour le canal de données en liaison montante, un mode de transmission pour les données en liaison montante dans le canal de données en liaison montante, une ressource temps-fréquence occupée par le canal de données en liaison montante et une ressource dans le domaine fréquentiel occupée par le canal de données en liaison montante.

7. Procédé de transmission de données en liaison montante, comprenant les étapes consistant à :
envoyer (210), par un dispositif de réseau, une information de commande en liaison descendante (DCI) à un dispositif terminal, un premier format DCI et un second format DCI de la DCI étant différents, le premier format DCI et le second format DCI correspondant à différentes longueurs d'information de commande et le premier format DCI et le second format DCI de la DCI étant utilisés par le dispositif terminal pour déterminer qu'un mode d'accès multiple en liaison montante pour le dispositif terminal est un multiplexage par répartition orthogonale de la fréquence à étalement par transformée de Fourier discrète (DFT-S-OFDM) ou un multiplexage par répartition orthogonale de la fréquence avec préfixe cyclique (CP-OFDM) ; et
recevoir (250), par le dispositif de réseau, des données en liaison montante transmises par le dispositif terminal selon le mode d'accès multiple en liaison montante.

8. Procédé selon la revendication 7, dans lequel la réception, par le dispositif de réseau, des données en liaison montante transmises par le dispositif terminal selon le mode d'accès multiple en liaison montante comprend en outre l'étape consistant à :
recevoir, par le dispositif de réseau, les données en liaison montante transmises par le dispositif terminal selon une structure de canal de données en liaison montante cible, la structure de canal de données en liaison montante cible étant déterminée par le dispositif terminal selon le mode d'accès multiple en liaison montante et des correspondances entre des modes d'accès multiple en liaison montante et des structures de canal de données en liaison montante.

9. Procédé selon la revendication 8, dans lequel la structure de canal de données en liaison montante comprend au moins une des structures suivantes :
un emplacement de ressource de DMRS pour le canal de données en liaison montante, une séquence DMRS pour le canal de données en liaison montante, un mode de transmission pour les données en liaison montante dans le canal de données en liaison montante, une ressource temps-fréquence occupée par le canal de données en liaison montante et une ressource dans le domaine fréquentiel occupée par le canal de données en liaison montante.

10. Dispositif terminal, comprenant :
une unité de réception (310), configurée pour recevoir une information de commande en liaison descendante (DCI) envoyée par un dispositif de réseau ;
une unité de détermination (320), configurée pour déterminer qu'un mode d'accès multiple en liaison montante pour le dispositif terminal est un multiplexage par répartition orthogonale de la fréquence à étalement par transformée de Fourier discrète (DFT-S-OFDM) ou un multiplexage par répartition orthogonale de la fréquence avec préfixe cyclique (CP-OFDM) selon un premier format DCI et un second format DCI de la DCI reçue par l'unité de réception, le premier format DCI étant différent du second format DCI et le premier format DCI et le second format DCI correspondant à différentes longueurs d'information de commande ; et
une unité d'envoi (330), configurée pour transmettre des données en liaison montante selon le mode d'accès multiple en liaison montante DFT-S-OFDM ou CP-OFDM déterminé par l'unité de détermination.

11. Dispositif terminal selon la revendication 10, dans lequel l'unité de détermination (320) est en outre spécifiquement configurée pour :
déterminer que le mode d'accès multiple en liaison montante pour le dispositif terminal est DFT-S-OFDM ou CP-OFDM selon le premier format DCI et le second format DCI de la DCI et des correspondances entre le premier format DCI et un mode d'accès multiple en liaison montante et le second format DCI et un mode d'accès multiple en liaison montante.

12. Dispositif terminal selon l'une quelconque des revendications 10 et 11, dans lequel l'unité d'envoi (330) est spécifiquement configurée pour :
en réponse à la détermination du fait que le mode d'accès multiple en liaison montante est DFT-S-OFDM, exécuter une transformation de Fourier discrète (DFT) sur les données en liaison montante et transmettre, dans un canal de données en liaison montante, les données en liaison montante sur lesquelles la DFT a été exécutée.

13. Dispositif terminal selon l'une quelconque des revendications 10 et 11, dans lequel l'unité d'envoi (330) est spécifiquement configurée pour :
en réponse à la détermination du fait que le mode d'accès multiple en liaison montante est CP-OFDM, interdire d'exécuter une DFT sur les données en liaison montante et transmettre, dans un canal de données en liaison montante, les données en liaison montante sur lesquelles aucune DFT n'a été exécutée.

14. Dispositif terminal selon l'une quelconque des revendications 10 à 13, dans lequel l'unité d'envoi (330) est en outre spécifiquement configurée pour :
déterminer une structure de canal de données en liaison montante cible selon le mode d'accès multiple en liaison montante et des correspondances entre des modes d'accès multiple en liaison montante et des structures de canal de données en liaison montante ; et
transmettre les données en liaison montante selon la structure de canal de données en liaison montante cible.

15. Dispositif terminal selon la revendication 14, dans lequel la structure de canal de données en liaison montante comprend au moins une des structures suivantes :
un emplacement de ressource de DMRS pour le canal de données en liaison montante, une séquence DMRS pour le canal de données en liaison montante, un mode de transmission pour les données en liaison montante dans le canal de données en liaison montante, une ressource temps-fréquence occupée par le canal de données en liaison montante et une ressource dans le domaine fréquentiel occupée par le canal de données en liaison montante.

16. Dispositif de réseau, comprenant :
une unité d'envoi (610), configurée pour envoyer une information de commande en liaison descendante (DCI) à un dispositif terminal, un premier format DCI et un second format DCI de la DCI étant différents, le premier format DCI et le second format DCI correspondant à différentes longueurs d'information de commande et le premier format DCI et le second format DCI de la DCI étant utilisés par le dispositif terminal pour déterminer qu'un mode d'accès multiple en liaison montante pour le dispositif terminal est un multiplexage par répartition orthogonale de la fréquence à étalement par transformée de Fourier discrète (DFT-S-OFDM) ou un multiplexage par répartition orthogonale de la fréquence avec préfixe cyclique (CP-OFDM) ; et
une unité de réception (620), configurée pour recevoir des données en liaison montante transmises par le dispositif terminal selon le mode d'accès multiple en liaison montante.

17. Dispositif de réseau selon la revendication 16, dans lequel l'unité de réception (620) est en outre spécifiquement configurée pour :
recevoir les données en liaison montante transmises par le dispositif terminal selon une structure de canal de données en liaison montante cible, la structure de canal de données en liaison montante cible étant déterminée par le dispositif terminal selon le mode d'accès multiple en liaison montante et des correspondances entre des modes d'accès multiple en liaison montante et des structures de canal de données en liaison montante.

18. Dispositif de réseau selon la revendication 17, dans lequel la structure de canal de données en liaison montante comprend au moins une des structures suivantes :
un emplacement de ressource de DMRS pour le canal de données en liaison montante, une séquence DMRS pour le canal de données en liaison montante, un mode de transmission pour les données en liaison montante dans le canal de données en liaison montante, une ressource temps-fréquence occupée par le canal de données en liaison montante et une ressource dans le domaine fréquentiel occupée par le canal de données en liaison montante.
